# EUROPEAN PATENT APPLICATION

(11) **EP 4 040 014 A1**
(43) Date of publication of application: **10.08.2022**
(21) Application number: 21155394.6
(22) Date of filing: 05.02.2021
(51) Int. Cl.: F16H 3/091, B60K 7/00, F16H 3/54, F16H 3/56

(54) **TRANSMISSION SYSTEM FOR TRANSMITTING A SPEED AND TORQUE OF A MOTOR TO A WHEEL ASSEMBLY AND METHOD FOR TRANSMITTING A SPEED AND TORQUE OF A MOTOR TO A WHEEL ASSEMBLY**

(71) Applicant: KNORR-BREMSE Systeme für Nutzfahrzeuge GmbH, 80809 München (DE)
(72) Inventor: TOTH, Janos, 6000 Kecskemét (HU); LÉNÁRT, Áron, 2013 Pomáz (HU); Györke, Zsombor, 8360 Keszthely (HU); Krüger, Sven Philip, 81476 München (DE); MONORI, Gyula, 6065 Lakitelek (HU); MLINARCSEK, Csaba, 1165 Budapest (HU); Hös, Levente, 1047 Budapest (HU)

(57) **Abstract**

The present invention relates to a transmission system (100, 100') for transmitting a speed and torque of a motor (1) to a wheel assembly comprising
a motor (1) configured to drive an input shaft (2) at a second speed,
a first gear assembly (10, 10') capable of being driven by the input shaft (2) and converting the second speed of the motor (1) to a first speed and
an output shaft (3) configured to transmit a speed and torque to a wheel assembly in accordance with the second speed or the first speed,
wherein the transmission system (100, 100') is capable of being switched between a second configuration providing the second speed and a first configuration providing the first speed.

## Description

The present invention relates to a transmission system for transmitting a speed and torque of a motor to a wheel assembly and a method for transmitting a speed and torque of a motor to a wheel assembly.

To transmit a speed and torque of a motor to a wheel assembly, different transmission systems are known. For example, a traction electric motor is mounted longitudinally to a chassis. The speed and torque are provided by the motor and transmitted to a differential by a cardan shaft and to the wheels by half shafts. In another example, a traction electric motor is mounted longitudinally to the axle. The speed and torque are provided by the motor and transmitted to a differential and to the wheels by half shafts. Two or three speed transmission assemblies may be arranged between the motor and the differential. As a further example, two traction motors are mounted laterally to the chassis. The speed and torque are provided by the motors and transmitted to a single speed transmission and to the wheels by half cardan shafts. In another example, one or two electric motors are mounted laterally to the axle. The motor or motors are offset with respect to the transmission output shaft. The speed and torque are provided from the motor or motors and transmitted to a transmission and to the wheels by half shafts.

With respect to the above transmission of a speed and torque of a motor to a wheel assembly and comparable systems, a gear reduction between the motor and the wheel may be required to adjust the speed and torque of the motor to the required wheel speed and torque. Such gear reduction results in efficiency losses and considerable installation space.

In view of the above, it is an object of the present invention to provide a transmission system and a respective method for transmitting a speed and torque of a motor to a wheel assembly with reduced efficiency losses and required installation space.

The object is solved by a transmission system for transmitting a speed and torque of a motor to a wheel assembly according to claim 1 and a method for transmitting a speed and torque of a motor to a wheel assembly according to claim 16. Further aspects of the present invention are subject of the dependent claims.

According to present invention, a transmission system for transmitting a speed and torque of a motor to a wheel assembly comprising a motor configured to drive an input shaft at a second speed, a first gear assembly capable of being driven by the input shaft and converting the second speed of the motor to a first speed and an output shaft configured to transmit a speed and torque to a wheel assembly in accordance with the second speed or the first speed, wherein the transmission system is capable of being switched between a second configuration providing the second speed and a first configuration providing the first speed.

The second speed may represent a main speed to drive the output shaft. Thus, the main speed of the output shaft can be provided by a direct drive, for example, without any gear reduction between the input shaft and the output shaft. Consequently, efficiency losses can at least be reduced in the second configuration. The first speed may be less than the second speed. Even though efficiency losses may appear by using the first gear assembly for a gear reduction to provide the output shaft with the first speed, such efficiency losses may be compensated by the design of the first gear assembly with respect to the second speed. In other words, as long as the first speed is lower than the second speed, the motor layout depends on the second speed while the first speed is subject to the first gear assembly. As a result, the speed range may be enhanced with the same motor or, in the event of an electric motor, with the same battery size.

Since some applications may provide the second speed as main speed while the first speed is lower than the second speed by a gear reduction, the first configuration may represent a first gear and the second configuration may represent a second gear of a vehicle. Accordingly, the terms "first configuration" and "second configuration" are assigned referring to such gear order. However, the first configuration or first speed, respectively, and the second configuration or second speed, respectively, are not restricted to represent a first gear and second gear.

The term "in accordance with the second speed or the first speed" is directed to a direct drive of the wheel assembly as well as an indirect one. For example, the wheel assembly may be directly driven at the second and/or first speed. Alternatively, the second and/or first speed may be further converted as addressed later.

The above transmission system may not only provide one motor but can also comprise several motors with respectively assigned input shafts, first gear assemblies and output shafts. For example, two smaller motors may provide a better weight distribution in comparison to one bigger motor. Further, in the event of two motors for an individual wheel drive a conventional differential may be omitted.

In view of the above, with the transmission system according to the present invention, the motor size can be reduced and a vehicle and motor speed can be harmonized which can cause better motor efficiency and higher range. Active gear pairs can also be reduced by using the inventive transmission system with a direct stage in the second speed, which has a positive impact on efficiency.

In some embodiments, the first gear assembly is configured to transmit the second speed to the output shaft in the second configuration and to convert the second speed to the first speed to transmit the first speed to the output shaft in the first configuration.

Accordingly, the first gear assembly is at least partially in engagement with both the input shaft and with the output shaft in the second configuration and in the first configuration as well. In the second configuration, the first gear assembly is configured to provide the output shaft with the second speed as is, i.e. the gear ratio of the first gear assembly is 1. In the first configuration, the first gear assembly provides the first speed to the output shaft with a gear ratio of less or more than 1, preferably a gear reduction with a gear ratio of i > 1. By providing at least one speed, here the second speed, by a direct drive, the number of transmissions associated with an efficiency loss due to gear ratios of less or more than 1 may be reduced.

Preferably, the first gear assembly comprises a planetary gear assembly comprising a sun gear driven by the input shaft at the second speed, one or more planet gears each having a rotational axis through its center, a ring gear and an actuator, and wherein the actuator is configured to cause the planet gear or at least one of the planet gears to drive the ring gear at the second speed in the second configuration, preferably by rigidly connecting a planet gear carrier rotatably supported around the input shaft with the ring gear and/or sun gear, and/or blocking the planet gear or at least one of the planet gears from rotating around it respective rotational axis, and to drive the ring gear at the first speed in the first configuration, preferably by rigidly connecting the planet gear carrier to a housing and/or another stationary portion of the transmission system.

The sun gear of the planetary gear of the first gear assembly may be connected to or integrally formed with the input shaft. Alternatively, the input shaft may be in engagement with the sun gear to rotate the sun gear with the second speed. Similarly, the ring gear of the planetary gear of the first gear assembly may be connected to or integrally formed with the output shaft. Alternatively, the ring gear may be in engagement with the output shaft to rotate the output shaft with the speed of the ring gear. The transmission of speed from the sun gear to the ring gear is accomplished by at least one planet gear between the sun gear and the ring gear. The at least one planet gear has a rotational axis through its center to allow the planet gear to rotate about its rotational axis. If more than one planet gear is provide, each of the planet gears provides such rotational axis. Further, the at least one planet gear is configured to be capable to rotate with the sun gear or ring gear, respectively. For example, the one or more planet gears may be supported by a planet gear carrier with the rotational axis of each of the planet gears being affixed to or integrally formed with the planet gear carrier. The planet gear carrier may be rotatably supported around the input shaft. Such rotatable support may be a direct or indirect support. In other words, the planet gear carrier may not necessarily rotatably supported by the input shaft but may be rotatably supported to rotate around a rotational axis in coaxially within the input shaft. Whether the planet gear rotates about its rotational axis and/or with the sun gear or ring gear, respectively, may be subject to the second or first configuration based on the operation of the actuator as described below.

In the second configuration, at least one planet gear of the first gear assembly may be caused by the actuator to rotate with the sun gear or ring gear, respectively, at the second speed. Thus, the ring gear of the first gear assembly and hence the output shaft rotates at the second speed.

In said configuration, the actuator may be configured to rigidly connect the planet gear carrier to the ring gear and/or sun gear, for example, by moving the actuator in a position to establish a form-fit connection and/or by activating a connection force as by activating an electro-magnetic force. Since the planet gear carrier is rotatably supported around the input shaft, the planet gear carrier and therefore the at least one planet gear is rotated with the second speed of the input shaft causing the ring gear and therefore the output shaft to be rotated with the second speed. Connecting the planet gear carrier with the ring gear instead of connecting the planet gear with the sun gear alternatively or in addition may provide the advantage of an improved spatial distribution and accessibility. Alternatively or in addition, the actuator may cause a rigid connection of the at least one planet gear with the input shaft, a portion of the motor rotating together with the input shaft and/or the ring gear. Alternatively or in addition, the rotational axis of the least one planet gear through its center may be blocked from rotation. As a result, a relative movement between the planet gear and the sun gear or ring gear, respectively, is prevented to transmit the first speed from the input shaft via the sun gear to the ring gear and hence the output shaft.

In the first configuration, the actuator may be configured to rigidly connect the planet gear carrier to a housing and/or another stationary portion of the transmission system. For example, the actuator is moved into a position to establish a form-fit connection and/or a connection by an activated force as by activating an electro-magnetic force to rigidly connect the planet carrier to a stationary component of the motor housing. Accordingly, the planet carrier is blocked from being rotated around the input shaft and thus the at least one planet gear is only rotated about its respective rotational axis. As a result, the rotation of the at least one planet gear about its rotational axis driven by the sun gear causes the ring gear and therefore the output shaft to be rotated by the first speed. In other words, the ring gear rotates with a first speed with respect to the second speed of the sun gear to allow the planet gear to provide a predetermined gear ratio of more than 1. Alternatively or in addition, the actuator may release the at least one planet gear from the afore-mentioned blocking state of its respective rotational axis with respect to the second configuration.

Accordingly, the planet gear may be switched or shifted by the actuator from one operative mode to another one, corresponding at least to the second configuration or first configuration. The actuator does thereby provide at least two operative modes. For example, the actuator may be formed as connecting member to be moved between a connecting position for the above rigid connection in the second configuration and another connecting position in the first configuration. Alternatively or in addition, the actuator may be formed as actuating element configured to move a portion of the planet gear, sun gear and/or ring gear in a respective connecting position.

The use of a planetary gear may provide a higher power density than, for example, helical gear pairs.

In some embodiments, the input shaft is in engagement with the output shaft in the second configuration and the input shaft is in engagement with the first gear assembly configured to convert the second speed to the first speed and to transmit the first speed to the output shaft in the first configuration.

In such embodiments, the first gear assembly is bypassed in the second configuration and the second speed is directly transmitted from the input shaft to the output shaft. Accordingly, any efficiency loss due to friction or the like within the first gear assembly does not affect the transmission of the second speed in the second configuration. In the first configuration, the first gear assembly may be connected to the input shaft and to the output shaft to provide the first speed to the output shaft.

Preferably, the first gear assembly comprises a helical gear stage to convert the second speed to the first speed in the first configuration.

The helical gear stage provides a less complex but flexible gear stage to convert the second speed to a first speed in the first configuration. The output gear as gear providing the first speed to the output shaft may be connected to or integrally formed with the output shaft. Alternatively, the output gear may be in engagement with the output shaft to rotate the output shaft with the first speed. Due to the helical gear design, the input gear rotated by the second speed and the output gear rotated with the first speed may be arranged in different angles to each other depending on constructive considerations. However, a spur gear stage may also be used as an alternative.

Advantageously, an actuator connected to the output shaft is movable, preferably in a direction of the longitudinal axis of the output shaft, to engage with the input shaft in the second configuration and to engage with the first gear assembly in the first configuration.

The actuator may be rigidly connected to the output shaft. Consequently, the output shaft moves together with the actuator to be connected to the input shaft in the second configuration and to the first gear assembly in the first configuration. Alternatively or in addition, the actuator may be moved relatively to the output shaft to prevent the output shaft from being moved in parallel, i.e. to reduce moving masses and complexity, or at least to restrict such movement. In such embodiment, the output shaft may comprise a connecting portion, e.g. an externally toothed gear, to be connected by the actuator, e.g. an internally toothed ring, to the input shaft in the second configuration and to the third gear of the first gear assembly in the first configuration by a longitudinal movement of the actuator with respect to the longitudinal axis of the output shaft in a second connection position corresponding to the second configuration and a first connecting position corresponding to the first configuration, respectively. Alternatively or in addition to the aforementioned form-fit connection, the rigid connection may also be provided by respective connection forces provided by the actuator and/or the respective portions to be connected. Alternatively, the actuator may be formed as the connecting portion relatively movable affixed to the output shaft to directly rigidly connect the output shaft to the input shaft in the second configuration or to the third gear of the first gear assembly in the first configuration.. In some embodiments, the actuator may be formed as the output gear of the first gear assembly.

Preferably, the actuator is movable into an intermediate position out of engagement with the input shaft and the first gear assembly.

According to the above, the output shaft is driven by neither the input shaft nor the first gear assembly. An idle state of the transmission system may be thereby implemented in an easy manner.

Similarly, the principle of an idle state of the transmission system may be implemented in embodiments related to the above first gear assembly configured to provide the second speed in the second configuration and the first speed in the first configuration. In such embodiments, an actuator may be configured to disconnect a transmission member of the first gear assembly from engagement. For example, the sun gear or the ring gear, respectively, of the above planetary gear may be moved in a position out of engagement with planet gear or planet gears. Comparably, the planet gear or planet gears may be moved out of engagement with the sun gear or the ring gear, respectively.

In some embodiments, the first gear assembly is arranged on one side of the motor and the output shaft extends through the motor from the one side of the motor with the first gear assembly to an opposite side of the motor.

The transmission system is therefore arranged on two opposite sides of the motor to achieve a compact design or to allow a distribution of the components of the transmission system in accordance with an available installation space.

Preferably, the input shaft is a hollow shaft and the output shaft is at least partially arranged coaxially within the hollow shaft to extend from the one side of the motor with the first gear assembly to an opposite side of the motor.

Due to arranging the output shaft coaxially within the input shaft to guide the output shaft from one side of the motor to the opposite side, the compactness of the transmission system may be enhanced and complexity may be further reduced.

The coaxial arrangement of the output shaft may be combined with a two motor design with respective input shafts, first gear assemblies and output shafts. With one big motor, such arrangement may be otherwise more complicated or even impossible.

In some embodiments, the output shaft drives a second gear assembly.

Accordingly, the transmission system may comprise a further gear stage for the wheel assembly. In particular, the second gear assembly may be a fix gear assembly, i.e. a constant gear ratio being not shiftable to provide different speeds as per the second configuration and first configuration with respect to the first gear assembly.

Preferably, the second gear assembly is a planetary gear assembly.

The planetary gear assembly may provide a higher power density as already addressed with respect to the first gear set designed as planetary gear assembly.

Advantageously, the second gear assembly drives at least one third gear assembly to drive at least one wheel end.

To allow more flexibility in terms of driving a wheel end of the wheel assembly, the third gear drive assigned to one wheel end may provide an individual gear ratio and/or redundancy. Accordingly, the second gear assembly may also drive more than one third gear assembly. Alternatively, the second gear assembly may be configured to directly drive a respective wheel end. As already addressed with respect to a transmission system comprising several motors with respective input shafts, first gear assemblies and output shafts each of such motors may further comprise a respective second gear assembly and/or third gear assembly for each wheel end or grouped wheel ends. In the event of such individual design, a differential may be omitted.

Preferably, the third gear assembly is a planetary gear assembly with a ring gear, planet gear carrier or a sun gear of the planetary gear assembly being stationary fixed to a housing and planet gears driven by the sun gear or driven by the ring gear of the planetary gear assembly driving a wheel end, preferably with a gear ratio of more than 1.

With the ring gear fixed to the housing, the planet gears driven by the sun gear directly transfer the speed to the wheel end. Accordingly, the sun gear may drive at least one planet gear between the sun gear and the stationary ring gear of the third gear assembly wherein a planet gear carrier as wheel end or as drive for a wheel end is rotated.

Alternatively, the planet gear carrier of the third gear assembly may be stationary with the ring gear of the third gear assembly being driven by the planet gears. Accordingly, the ring gear may form the wheel end or a drive for a wheel end. In other words, the wheel end is indirectly driven by the planet gears driving the ring gear.

As a further alternative, the sun gear may be stationary with the planet gears being driven by the ring gear as an input of the third gear assembly. The wheel end may be driven by the planet gears, for example, via the planet gear carrier.

With the third gear assembly providing a gear ratio of more than 1, the wheel torque may be further increased.

Advantageously, at least the second gear assembly is arranged on an opposite side of the motor with respect to the first gear assembly.

The at least secondary gear assembly may be driven by the output shaft guided through the motor, preferably at least partially arranged coaxially within the input shaft. Alternatively, the second gear assembly may provide or being connected to a shaft guided through the motor to be driven by the output shaft with an engagement portion on the input side of the motor. In principle, with respect to opposite sides of the motor, the side of the motor associated with the input shaft and first gear assembly may be considered as input side and the opposite side as output side.

In some embodiments, the motor is an electric motor of an electric or hybrid vehicle.

The required installation space of batteries for electric motors of electric or hybrid vehicles accompanied with the respective weight of such batteries is a crucial factor. Due to the transmission system in accordance with the present invention, the efficiency can be enhanced. Accordingly, the battery size may be reduced or an increased performance may be achieved. Further, with providing more than one electric motor with respective components to be driven, wherein the motor is smaller than one bigger motor to drive all of such components, the required installation space may be spatially separated.

As an example, an electric motor may comprise a stator and a rotor. The rotor may comprise permanent magnets to be rotated within the stator distanced by an air gap. The rotor may be rigidly connected to a hollow output shaft or integrally formed with such output shaft. The output shaft may be rotatable supported by a bearing assembly, e.g. at least two bearings, between the housing of the electric motor and the shaft or rotor, respectively. However, the electric motor design may be different, for example, of an induction motor type.

In another aspect, the invention also relates to a method for transmitting a speed and a torque of a motor to a wheel assembly using a transmission system as described above, the method comprising the steps of:
driving an input shaft by a motor at a second speed, and
driving an output shaft at the second speed or a first speed in accordance with switching the transmission system in one of a second or first configuration,
wherein the second speed is provided by engaging the output shaft with the input shaft or a first gear assembly driven by the input shaft in the second configuration, and
the first speed is provided by the first gear assembly driven by the input shaft in the first configuration.

Further aspects and embodiments of the inventive method correspond to the respective features and modifications of the transmission system as described above.

Further advantages, aspects and details of the invention are subject to the claims, the following description of preferred embodiments applying the principles of the invention, and drawings. In particular:
**Fig. 1** is a schematic diagram of a transmission system according to a first embodiment of the present invention; and
**Fig. 2** is a schematic diagram of a transmission system according to a second embodiment of the present invention.

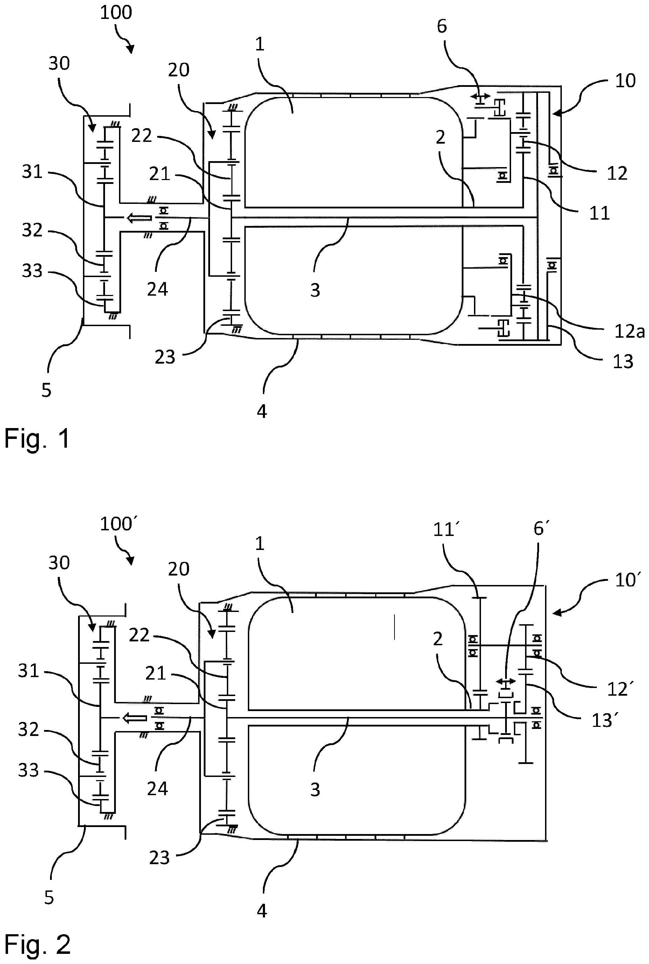

**Fig. 1** shows a schematic diagram of transmission system 100 according to a first embodiment of the present invention. The transmission system 100 comprises a motor 1, an input shaft 2, a first gear assembly 10, an output shaft 3, an actuator 6, a second gear assembly 20 and a third gear assembly 30 to drive a wheel end 5. The input shaft 2 is a hollow shaft driven by the motor 1 at a second speed. One end of the input shaft 2 extends in the longitudinal direction of the input shaft to one side of the motor 1 with the first gear assembly 10, i.e. to an input side. According to the first embodiment as per Fig. 1, the first gear assembly 10 is a planetary gear assembly with a sun gear 11 integrally formed at the one end of the input shaft 2. However, the sun gear 11 may also only be connected to or be in engagement with the input shaft 2. Further, the first gear assembly 10 comprises several planet gears 12 each of which providing a rotational axis through its center, wherein each rotational axis is rotationally supported to be rotatable about the longitudinal axis of the input shaft 2. The support is, for example, provided by an annular carrier element, here a planet gear carrier 12a, pivotally supported around the output shaft 3. In Fig. 1 as exemplary embodiment, the planet gear carrier 12a is rotatably supported around the output shaft by a bearing arranged at a stationary portion of the motor 1. The planet gears 12 are at least partially in engagement with the sun gear 11 and the ring gear 13. The ring gear 13 is provided at the outer circumference of the envelope curve formed by the planet gears 12 and is integrally formed with the output shaft 3. However, the ring gear 13 may also only be connected to or be in engagement with the output shaft 3. In Fig. 1, the ring gear 13 is pivotally supported at a housing 4 of the transmission system to be rotated in response to a rotation of the planet gears 12 to rotate the output shaft 3 accordingly.

In a second configuration, the actuator 6 has been moved in a longitudinal direction as indicated be the double arrow in Fig. 1 to rigidly connect the planet gear carrier 12a to the ring gear 13. Consequently, there is no relative movement between the planet gear carrier 12a and the ring gear 13 and therefore the planet gears 12 and the ring gear 13. As a result, the sun gear drives the planet gear carrier 12a via the planet gears 12 with the second speed about the longitudinal axis of the input shaft 2 and thereby the ring gear 13 with the second speed to drive the output shaft 3 at the second speed in the second configuration.

In a first configuration, the actuator 6 has been moved in an opposite direction to disconnect the planet gear carrier 12a from the ring gear 13 and to provide a rigid connection to a stationary part of the motor 1. The planet gear carrier 12a is thereby blocked from being rotated around the longitudinal axis of the input shaft 2 and the planet gears 12 are capable of rotating about their respective rotational axes through each center of the planet gears 12 to transmit a first speed to the ring gear 13 to rotate the output shaft 3 at such first speed.

It should be noted that the actuating mechanism to shift the transmission system from the second configuration to the first configuration, and vice versa, may be designed differently from the above embodiment. For example, the actuator 6 may be moved to rigidly connect the planet gear carrier 12a to another stationary portion of the transmission system 100 in the first configuration. As a result, the planet gears 12 are also only capable to rotate about the respective rotational axis through each of the planet gears 12 to transmit the first speed in accordance with such rotation to the ring gear 13. In the second configuration, the rigid connection is released and the planet gear carrier 12a with the planet gears 12 is rotated at the second speed. In another variant, the actuator 6 may be configured to rigidly connect the planet gear carrier 12a or the planet gears 12, respectively, to the sun gear 12 and/or the input shaft 2 in the second configuration to rotate the ring gear 13 with the second speed and to release such connection in the first configuration to rotate the ring gear 13 with the first speed.

Although not shown in Fig. 1, the actuator 6 or another actuator may be configured to disconnect the planet gears 12 from engagement with the sun gear 12 and/or ring gear 13 to allow the transmission system to be operated in an idle state. Alternatively, the sun gear 12 may be disconnected from the input shaft 2 or the ring gear 13 may be disconnected from the output shaft 3, if not integrally formed by the respective shafts to provide an idle state.

The output shaft 3 driven at the second speed or first speed extends through the hollow input shaft 2 through the motor 1 to the opposite side of the motor 1, i.e. from the input side to an output side of the motor 1. A respective second end of the output shaft 3 on the output side is connected to the second gear assembly 20. According to the first embodiment shown in Fig. 1, the second gear assembly 20 is also a planetary gear assembly with a sun gear 21 integrally formed with the output shaft 3 or otherwise connected thereto. A ring gear 23 of the second gear assembly is fixed to the housing 4 or is otherwise stationary mounted in the transmission system 100. Accordingly, driving the planet gears 22 by the sun gear 21 being driven at a second or first speed causes an output 24 to rotate in accordance of the rotation of the planet gears 22 around the sun gear 21. The output 24 is operatively connected to the third gear assembly 30 to drive the wheel end 5. In Fig. 1 as exemplary embodiment, the output 24 is formed by a planet gear carrier of the planet gears 22 of the second gear assembly. The third gear assembly 30 of Fig. 1 is also a planetary gear assembly with a sun gear 31 driven by the output 24 and a stationary ring gear 33. Similarly to the second gear assembly 20, planet gears 32 driven by the sun gear 31 rotate the wheel end 5 connected thereto.

**Fig. 2** shows a schematic diagram of transmission system 100' according to a second embodiment of the present invention. The transmission system 100' of the second embodiment differs from the transmission system 100 of the first embodiment in the interaction of the input shaft 2, first gear assembly 10', output shaft 3 and actuator 6'. In other words, the transmission system 100' provides an alternative design on the input side of the motor 1. Accordingly, the description of components and functionalities on the output side of the motor 1 as per the first embodiment also applies for the second embodiment and is therefore omitted. Further, same reference signs are used, where applicable.

With respect to the second embodiment, the first gear assembly 10' is a helical gear stage comprising a first gear 11' capable of being driven by the input shaft 2 and a second gear 12' on a same shaft as the first gear 11' to drive a third gear 13' capable of driving the output shaft 3 with the first speed in the first configuration. The actuator 6' is connected to the output shaft 3 and relatively movable thereto on a longitudinal direction of the axis of the output shaft 3. The actuator 6' is configured to connect the output shaft 3 to the input shaft 2 to transmit the second speed of the input shaft 2 to the output shaft 3 in the second configuration and to connect the output shaft 3 to the third gear 13', i.e. the first gear assembly 10', to transmit the first speed to the output shaft 3 in the first configuration. In other words, the first gear assembly 10' is bypassed in the second configuration to provide a direct drive of the output shaft 3 by the input shaft 2.

The invention has been described in conjunction with various embodiments herein. However, the invention is not limited to the described embodiments. In particular, a transmission system may not be restricted to one motor comprising an input shaft, a first gear assembly and an output shaft but may also comprise two or more motor comprising respective input shafts, first gear assemblies and output shafts to distribute the weight over a vehicle and/or to drive wheel assemblies individually. Further, the second and third gear assemblies as fixed gear type downstream of the first gear assembly as two-speed gearbox must not necessarily be of a planetary gear type. For example, the planetary gear of the second gear assembly may be replaced by helical gear sets with two stages wherein the input and output shafts of the second gear assembly may be coaxial. Such design may allow cost savings and a compact packaging.

### LIST OF REFERENCE SIGNS

- 1: motor
- 2: input shaft
- 3: output shaft
- 4: housing
- 5: wheel end
- 6,6': actuator
- 10, 10': first gear assembly
- 11: sun gear (first gear assembly 10)
- 12: planet gear (first gear assembly 10)
- 12a: planet gear carrier (first gear assembly 10)
- 13: ring gear (first gear assembly 10)
- 11': first gear (first gear assembly 10')
- 12': second gear (first gear assembly 10')
- 13': third gear (first gear assembly 10')
- 20: second gear assembly
- 21: sun gear (second gear assembly 20)
- 22: planet gear (second gear assembly 20)
- 23: ring gear (second gear assembly 20)
- 24: output (second gear assembly 20)
- 30: third gear assembly
- 31: sun gear (third gear assembly 30)
- 32: planet gear (third gear assembly 30)
- 33: ring gear (third gear assembly 30)
- 100, 100': transmission system

## Claims

1. Transmission system (100, 100') for transmitting a speed and torque of a motor (1) to a wheel assembly comprising
a motor (1) configured to drive an input shaft (2) at a second speed,
a first gear assembly (10, 10') capable of being driven by the input shaft (2) and converting the second speed of the motor (1) to a first speed and
an output shaft (3) configured to transmit a speed and torque to a wheel assembly in accordance with the second speed or the first speed,
wherein the transmission system (100, 100') is capable of being switched between a second configuration providing the second speed and a first configuration providing the first speed.

2. The transmission system (100) according to claim 1, wherein the first gear assembly (10) is configured to transmit the second speed to the output shaft (3) in the second configuration and to convert the second speed to the first speed to transmit the first speed to the output shaft (3) in the first configuration.

3. The transmission system (100) according to claim 2, wherein the first gear assembly (10) comprises a planetary gear assembly comprising a sun gear (11) driven by the input shaft (2) at the second speed, one or more planet gears (12) each having a rotational axis through its center, a ring gear (13) and an actuator (6), and wherein the actuator (6) is configured to cause the planet gear (12) or at least one of the planet gears (12) to drive the ring gear (13) at the second speed in the second configuration, preferably by rigidly connecting a planet gear carrier (12a) rotatably supported around the input shaft (2) with the ring gear (13) and/or sun gear (11), and/or blocking the planet gear (12) or at least one of the planet gears (12) from rotating around it respective rotational axis, and to drive the ring gear (13) at the first speed in the first configuration, preferably by rigidly connecting the planet gear carrier (12a) to a housing (4) and/or another stationary portion of the transmission system (100).

4. The transmission system (100') according to claim 1, wherein the input shaft (2) is in engagement with the output shaft (3) in the second configuration and the input shaft (3) is in engagement with the first gear assembly (10') configured to convert the second speed to the first speed and to transmit the first speed to the output shaft (3) in the first configuration.

5. The transmission system (100') according to claim 4, wherein the first gear assembly (10') comprises a helical gear stage (11', 12', 13') to convert the second speed to the first speed in the first configuration.

6. The transmission system (100') according to claim 4 or 5, wherein an actuator (6') connected the output shaft (3) is moveable, preferably in a direction of the longitudinal axis of the output shaft (3), to engage with the input shaft (2) in the second configuration and to engage with the first gear assembly (10') in the first configuration.

7. The transmission system (100') according to claim 6, wherein the actuator (6') is movable into an intermediate position out of engagement with the input shaft (2) and the first gear assembly (10').

8. The transmission system (100, 100') according to anyone of the preceding claims, wherein the first gear assembly (10, 10') is arranged on one side of the motor (1) and the output shaft (3) extends through the motor (1) from the one side of the motor (1) with the first gear assembly (10, 10') to an opposite side of the motor (1).

9. The transmission system (100, 100') according to claim 8, wherein the input shaft (2) is a hollow shaft and the output shaft (3) is at least partially arranged coaxially within the hollow shaft to extend from the one side of the motor (1) with the first gear assembly (10, 10') to an opposite side of the motor (1).

10. The transmission system (100, 100') according to any one of the preceding claims, wherein the output shaft (3) drives a second gear assembly (20).

11. The transmission system (100, 100') according to claim 10, wherein the second gear (20) assembly is a planetary gear (21, 22, 23, 24) assembly.

12. The transmission system (100, 100') according to claim 10 or 11, wherein the second gear assembly (20) drives at least one third gear assembly (30) to drive at least one wheel end (5).

13. The transmission system (100, 100') according to claim 12, wherein the third gear assembly (30) is a planetary gear assembly (31, 32, 33) with a ring gear (33), planet gear carrier or sun gear (31) of the planetary gear assembly (31, 32, 33) stationary fixed to a housing (4) and planet gears (32) driven by the sun gear (31) of the planetary gear assembly (31, 32, 33) or driven by the ring gear (33) driving a wheel end (5), preferably with a gear ratio of more than 1.

14. The transmission system (100, 100') according to any one of the claims 10 to 13, wherein at least the second gear assembly (20) is arranged on an opposite side of the motor (1) with respect to the first gear assembly (10) according to claim 8 or 9.

15. The transmission system (100, 100') according to any one of the preceding claims, wherein the motor (1) is an electric motor of an electric or hybrid vehicle.

16. Method for transmitting a speed and torque of a motor (1) to a wheel assembly using a transmission system (100, 100') according to one of the preceding claims, the method comprising the steps of:
driving an input shaft (2) by a motor (1) at a second speed, and
driving an output shaft (3) at the second speed or a first speed in accordance with switching the transmission system (100, 100') in one of a second or first configuration,
wherein the second speed is provided by engaging the output shaft (3) with the input shaft (2) or a first gear assembly (10) driven by the input shaft (2) in the second configuration, and
the first speed is provided by the first gear assembly (10, 10') driven by the input shaft in the first configuration.
